# FASCICULE DE BREVET EUROPEEN

(11) **EP 0 908 341 B1**
(45) Date de publication et mention de la délivrance du brevet: **11.12.2002**
(21) Numéro de dépôt: 98118844.4
(22) Date de dépôt: 06.10.1998
(51) Int. Cl.: B60H 3/06

(54) **Procédé et dispositif pour détecter l'état d'un filtre à air dans une installation de chauffage et/ou climatisation de l'habitacle d'un véhicule automobile**
Verfahren und Vorrichtung zur Feststellung vom Luftfilterzustand in einer Heizungs- und/oder Klimaanlage des Fahrgastraumes eines Kraftfahrzeuges
Method and device for detecting the condition of an air filter in a vehicle heating and/or air conditioning unit in the passenger compartment of motor vehicles

(30) Priorité: 07.10.1997 FR 9712495
(43) Date de publication de la demande: 14.04.1999
(73) Titulaire: Valeo Distribution, 93582 Saint-Ouen (FR)
(72) Inventeur: Christol, Eric, 76190 Mont Saint Aignan (FR)
(74) Mandataire: Lemaire, Marc

(56) Documents cités:
- EP-A- 0 623 376
- DE-A- 4 037 685
- US-A- 4 629 479
- US-A- 4 751 501

## Description

L'invention concerne la détection de l'état d'un filtre à air d'une installation de chauffage et/ou climatisation de l'habitacle d'un véhicule automobile.

Dans une installation de ce genre, il est prévu habituellement un filtre à air pour filtrer l'air pénétrant dans l'installation. L'air filtré est ensuite traité puis distribué dans l'habitacle par l'intermédiaire d'une ou plusieurs buses réparties en des endroits choisis de ce dernier.

Au fur et à mesure de l'utilisation de l'installation, ce filtre s'encrasse, ce qui provoque son colmatage et des pertes de charge préjudiciables au bon fonctionnement de l'installation. De plus, ce colmatage est souvent une source d'odeurs désagréables émises dans l'habitacle lorsque l'installation est en fonctionnement.

Il peut être aussi possible que ce filtre se détériore dans le temps et soit déchiré ou troué.

Généralement, le filtre est inclus dans une cartouche remplaçable qui doit être échangée contre une cartouche neuve, lorsque le filtre est colmaté, saturé ou détérioré.

Pour cela, il est nécessaire que l'opérateur accède à l'installation, soit dans le compartiment moteur, soit dans l'habitacle, puis ouvre une trappe d'accès, et retire la cartouche pour déterminer son état, généralement par un simple examen visuel.

Comme le filtre est souvent placé dans un endroit difficile d'accès, ces opérations demandent du temps et peuvent s'avérer inutiles si l'opérateur constate, après examen du filtre, que celui-ci est encore en bon état et n'a donc pas besoin d'être changé.

L'invention vise à éviter les inconvénients précités.

C'est en particulier un but de l'invention de procurer des moyens permettant de détecter l'état d'un filtre à air dans une installation du type ci-dessus, sans qu'il soit nécessaire de procéder au démontage du filtre.

Elle propose à cet effet un procédé pour détecter l'état d'un filtre à air dans une installation de chauffage et/ou climatisation de l'habitacle d'un véhicule automobile, dans lequel on met l'installation en fonctionnement selon un mode donné, on mesure un paramètre d'un flux d'air émis dans l'habitacle par une buse d'air de l'installation, et on compare la valeur mesurée de ce paramètre à une valeur de référence, ce qui permet de déterminer si le filtre est ou non à remplacer.

Ainsi, le procédé de l'invention repose essentiellement sur une mesure d'un paramètre du flux d'air envoyé par une buse d'air de l'installation, alors que celle-ci fonctionne dans des conditions bien définies, et sur une comparaison de la valeur du paramètre ainsi mesurée avec une valeur de référence.

Comme cette mesure est effectuée dans des conditions standard, donc reproductibles, correspondant à un mode de fonctionnement donné, il est possible d'effectuer une comparaison objective de la valeur mesurée à la valeur de référence. Cette valeur de référence correspond à la valeur théorique mesurée dans les mêmes conditions de fonctionnement, et pour le même type de véhicule, avec un filtre neuf, non colmaté et non détérioré.

Le paramètre est de préférence une pression du flux d'air. Toutefois, on peut choisir aussi notamment un débit du flux d'air ou une vitesse du flux d'air.

La buse d'air utilisée pour la mesure du paramètre est de préférence un aérateur de planche de bord, par exemple l'aérateur situé du côté conducteur.

Le mode de fonctionnement de l'installation choisi pour la mesure du paramètre correspond avantageusement à un mode de ventilation dans lequel le flux d'air est pulsé à une vitesse maximale.

Selon une autre caractéristique de l'invention, on effectue la mesure du paramètre sur une période de temps limité, typiquement de l'ordre de quelques secondes, après stabilisation de la mesure.

La valeur de référence correspond à des conditions de mesure déterminées, qui sont fonction notamment du type du véhicule, de la buse d'air par laquelle est émis le flux d'air et du mode de fonctionnement d'installation pendant la mesure.

De préférence, on compare la valeur mesurée et la valeur de référence, par exemple à l'aide d'un tableau, d'un graphique, d'un abaque, ou analogue.

Sous un autre aspect, l'invention concerne un dispositif pour la mise en oeuvre du procédé ci-dessus.

Ce dispositif comprend essentiellement un capteur propre à être appliqué à la sortie d'une buse d'air de l'installation pour recueillir le flux d'air, et un appareil de mesure relié au capteur et propre à mesurer un paramètre représentatif du flux d'air.

Avantageusement, le capteur comprend un boîtier présentant une face de contact de forme adaptée à celle de la buse d'air et un orifice de sortie relié à l'appareil de mesure par un conduit flexible.

Le boîtier est de préférence amovible par rapport au conduit, ce qui permet d'utiliser à chaque fois un boîtier adapté au type du véhicule.

La face de contact du boîtier est munie sur son pourtour d'un revêtement déformable imperméable à l'air, par exemple en mousse de matière plastique, de manière à garantir que tout le flux d'air émis par la buse d'air soit recueilli dans le boîtier du capteur.

Selon une autre caractéristique avantageuse de l'invention, l'appareil de mesure comprend des moyens d'affichage propres à afficher directement la valeur du paramètre mesuré.

Cela permet ainsi à l'opérateur de lire directement, par exemple, par des moyens d'affichage numérique, la valeur du paramètre, une fois la mesure stabilisée.

De préférence, l'appareil de mesure est un appareil de mesure d'une pression d'air, tel qu'un manomètre.

Il peut s'agir aussi d'un appareil servant à mesurer un débit d'air ou un appareil servant à mesurer une vitesse d'air.

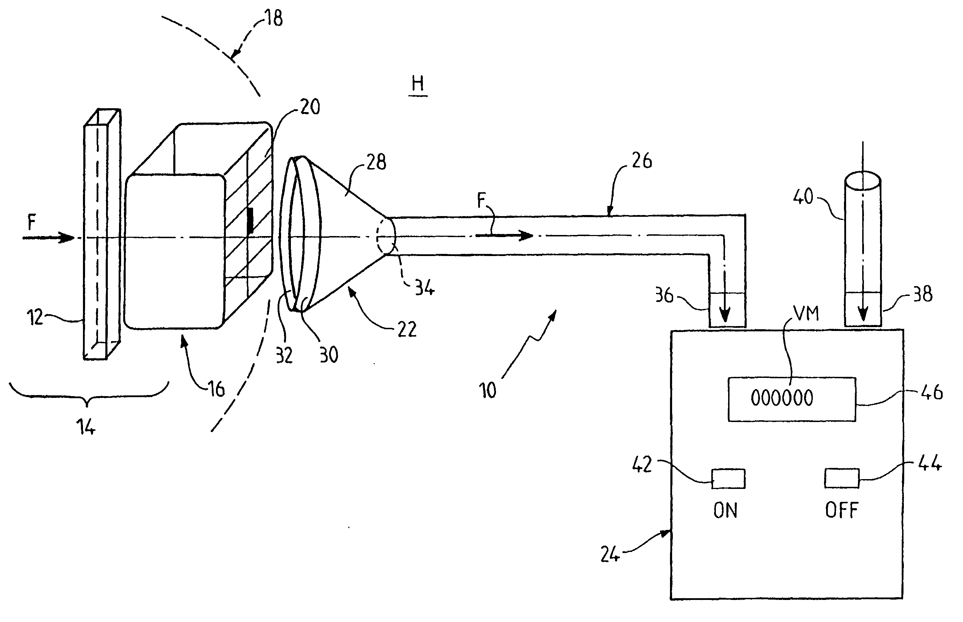

Dans la description qui suit, faite à titre d'exemple, on se réfère au dessin annexé sur lequel :
la figure unique représente schématiquement un dispositif de détection selon l'invention lors de la mesure d'un flux d'air émis par une buse d'air d'une installation de chauffage et/ou climatisation de l'habitacle d'un véhicule automobile.

Le dispositif de détection 10 représenté sur le dessin est destiné à détecter l'état d'un filtre 12 faisant partie d'une installation de chauffage et/ou climatisation 14 de l'habitacle H d'un véhicule automobile. Le filtre 12 est propre à filtrer un flux d'air F qui entre dans l'installation et qui est ensuite traité (réchauffé, refroidi ou climatisé) par cette dernière avant d'être distribué dans l'habitacle au travers d'une ou plusieurs buses d'aération choisies.

Ces buses comprennent notamment un aérateur 16 logé dans la planche de bord 18 du véhicule. Dans l'exemple, cet aérateur 16 est celui situé du côté conducteur, c'est-à-dire au poste de conduite. L'aérateur 16 comporte une grille mobile 20 susceptible d'orienter le flux d'air dans une direction choisie de l'habitacle. En outre, cette grille peut être obturée par des moyens appropriés, en eux-mêmes connus.

Le dispositif de détection 10 comprend un capteur de mesure 22 relié à un appareil de mesure 24 par un conduit flexible 26.

Le capteur 22 comprend un boîtier 28, dans l'exemple de forme conique, présentant une face de contact 30 ayant une forme adaptée à celle de la buse d'air 16. Cette face de contact est ouverte et munie sur son pourtour d'un revêtement déformable 32 imperméable à l'air, par exemple en mousse de matière plastique. Ainsi, le capteur peut être appliqué étroitement contre la grille 20 de l'aérateur 16 pour recueillir intégralement le flux d'air s'échappant de la grille 20 de l'aérateur lorsque l'installation 14 est en fonctionnement.

Bien entendu, il peut être envisagé que la face de contact 30 du capteur 22 soit recouverte d'un revêtement déformable qui soit imperméable à l'air sur son pourtour mais perméable à l'air dans la région de la face ouverte du capteur. De ce fait, des impuretés éventuelles peuvent être empéchées d'y pénétrer sans pour cela gêner le passage de la totalité du flux dans ce capteur.

Le boîtier 28 présente en outre un orifice de sortie 34 relié à une extrémité du conduit flexible 26. L'autre extrémité de ce conduit est reliée à un embout 36 de l'appareil de mesure 24. Celui-ci comporte en outre un autre embout 38 sur lequel est raccordé une prise d'air 40 qui est en communication avec l'air contenu dans l'habitacle H du véhicule.

Préférentiellement, le boîtier 28 est amovible par rapport au conduit 26 de manière à pouvoir utiliser des boîtiers de forme et de section s'adaptant à des formes de buses différentes.

Dans l'exemple, l'appareil 24 est un manomètre différentiel servant à mesurer la pression du flux d'air F recueilli par le capteur 22 et amené dans l'appareil lui-même par la conduite 26. Cet appareil possède un témoin 42 de mise en marche (témoin "ON") et un témoin 44 d'arrêt (témoin "OFF"). L'appareil 24 comporte en outre un affichage numérique 46 donnant directement la valeur mesurée VM du paramètre (ici la pression) mesuré par l'appareil 24.

On décrira maintenant un exemple de procédé de détection obtenu par le dispositif 10.

La mesure du paramètre du flux d'air (ici la pression) doit être effectuée dans des conditions standard parfaitement reproductibles qui sont fonction notamment du type du véhicule, de la buse d'air par laquelle est émis le flux d'air et du mode de fonctionnement de l'installation pendant la mesure.

Dans l'exemple, la mesure du paramètre s'effectue dans le mode de ventilation, c'est-à-dire dans une configuration pour laquelle tout le flux d'air est froid et distribué uniquement par les aérateurs situés dans la planche de bord 18 du véhicule. Pour la mesure, tous les aérateurs de planches de bord sont fermés, à l'exception de l'aérateur 16 situé du côté conducteur. Il en résulte que le flux d'air ne peut être envoyé dans l'habitacle que par cet aérateur 16.

La mesure s'effectue ici dans une configuration où le flux d'air est pulsé à une vitesse maximale, le moteur du véhicule étant en marche et tournant à un régime déterminé, par exemple à 1500 tours/minutes.

L'installation étant mise en marche dans ce mode de fonctionnement donné, il suffit de mettre en route l'appareil 24 et de placer le capteur 22 en contact étroit avec la grille de l'aérateur 16 pour recueillir tout le flux d'air.

L'opérateur observe directement la valeur mesurée VM sur l'affichage 46 et note la valeur obtenue, après stabilisation. Généralement, cette opération ne nécessite que quelques secondes.

Il lui suffit alors de comparer la valeur mesurée VM à une valeur de référence VR qui lui est donné par un tableau, graphique, abaque ou analogue. Cette valeur VR représente la valeur théorique obtenue dans les mêmes conditions, lorsque le filtre est en parfait état.

L'opérateur doit ensuite comparer la valeur VM à la valeur VR pour déterminer l'état du filtre et décider s'il y a lieu ou non de remplacer ce filtre par un filtre neuf.

A titre d'exemple, la valeur VR peut être de 6 millibars et il peut être prévu que le filtre soit changé lorsque la valeur VM est inférieure ou égale à 4 millibars.

Bien entendu, l'invention n'est pas limitée à la forme de réalisation décrite précédemment et s'étend à d'autres variantes.

En particulier, la détection de l'état du filtre peut être effectuée à partir d'un autre paramètre du flux d'air, par exemple un débit ou encore une vitesse de ce flux d'air.

Ainsi, grâce à l'invention il peut être facilement constaté l'état du filtre, tel que son colmatage ou sa détérioration.

## Revendications

1. Procédé pour détecter l'état d'un filtre à air dans une installation de chauffage et/ou climatisation de l'habitacle d'un véhicule automobile,
**caractérisé en ce que** l'on met l'installation (14) en fonctionnement dans un mode donné, on mesure un paramètre (P) d'un flux d'air (F) émis dans l'habitacle (H) par une buse d'air (16) de l'installation (14), et on compare la valeur mesurée (VM) de ce paramètre à une valeur de référence (VR), ce qui permet de déterminer si le filtre est ou non à remplacer.

2. Procédé selon la revendication 1, **caractérisé en ce que** le paramètre est une pression du flux d'air (F).

3. Procédé selon la revendication 1, **caractérisé en ce que** le paramètre est un débit du flux d'air (F).

4. Procédé selon la revendication 1, **caractérisé en ce que** le paramètre est une vitesse du flux d'air (F).

5. Procédé selon l'une des revendications précédentes, **caractérisé en ce que** la buse d'air utilisée pour la mesure du paramètre est un aérateur (16) de planche de bord.

6. Procédé selon l'une des revendications précédentes, **caractérisé en ce que** le mode de fonctionnement de l'installation choisi pour la mesure du paramètre correspond à un mode de ventilation dans lequel le flux d'air (F) est pulsé à une vitesse maximale.

7. Procédé selon l'une des revendications précédentes, **caractérisé en ce que** l'on effectue la mesure du paramètre sur une période de temps limité, typiquement de l'ordre de quelques secondes, après stabilisation de la mesure.

8. Procédé selon l'une des revendications précédentes, **caractérisé en ce que** la valeur de référence (VR) correspond à des conditions de mesure déterminées, qui sont fonction notamment du type du véhicule, de la buse d'air par laquelle est émis le flux d'air et du mode de fonctionnement de l'installation pendant la mesure.

9. Procédé selon l'une des revendications précédentes, **caractérisé en ce que** l'on compare la valeur mesurée (VM) et la valeur de référence (VR).

10. Dispositif pour la mise en oeuvre du procédé selon l'une des revendications précédentes,
**caractérisé en ce qu'**il comprend un capteur (22) propre à être appliqué à la sortie d'une buse d'air (16) de l'installation (14) pour recueillir le flux d'air (F), et un appareil de mesure (24) relié au capteur et propre à mesurer un paramètre représentatif du flux d'air.

11. Dispositif selon la revendication 10, **caractérisé en ce que** le capteur (22) comprend un boîtier (28) présentant une face de contact (30) de forme adaptée à celle de la buse d'air (16) et un orifice de sortie (34) relié à l'appareil de mesure (24) par un conduit flexible (26).

12. Dispositif selon la revendication 11, **caractérisé en ce que** le boîtier (28) est amovible par rapport au conduit (26).

13. Dispositif selon la revendication 11, **caractérisé en ce que** la face de contact (30) du boîtier (28) est munie sur son pourtour d'un revêtement déformable (32) imperméable à l'air, par exemple en mousse de matière plastique.

14. Dispositif selon la revendication 11, **caractérisé en ce que** la face de contact (30) du boîtier (28) est recouverte d'un revêtement déformable (32) dont seul le pourtour est imperméable à l'air.

15. Dispositif selon l'une des revendications 10 à 14, **caractérisé en ce que** l'appareil de mesure (24) comprend des moyens d'affichage (46) propres à afficher la valeur du paramètre mesuré.

16. Dispositif selon l'une des revendications 10 à 15, **caractérisé en ce que** l'appareil de mesure (24) est un appareil de mesure d'une pression d'air, tel qu'un manomètre.

17. Dispositif selon l'une des revendications 10 à 15, **caractérisé en ce que** l'appareil de mesure (24) est un appareil de mesure d'un débit d'air.

18. Dispositif selon l'une des revendications 10 à 15, **caractérisé en ce que** l'appareil de mesure (24) est un appareil de mesure d'une vitesse d'air.

## Patentansprüche

1. Verfahren zur Erfassung des Zustandes eines Luftfilters in einer Heiz- und/oder Klimaanlage für den Innenraum eines Kraftfahrzeuges, **dadurch gekennzeichnet, daß** man die Anlage (14) in einem gegebenen Modus in Betrieb nimmt, man einen Parameter (P) einer in den Innenraum (H) von einem Luftausströmer (16) in der Anlage (14) ausgegebene Luftströmung (F) mißt, und daß man den gemessenen Wert (VM) dieses Parameters mit einem Referenzwert (VR) vergleicht, wodurch es ermöglicht ist, zu bestimmen, ob der Filter zu ersetzen ist oder nicht.

2. Verfahren nach Anspruch 1, **dadurch gekennzeichnet, daß** der Parameter ein Druck der Luftströmung oder des Luftflusses (F) ist.

3. Verfahren nach Anspruch 1, **dadurch gekennzeichnet, daß** der Parameter ein Durchsatz der Luftströmung (F) ist.

4. Verfahren nach Anspruch 1, **dadurch gekennzeichnet, daß** der Parameter eine Geschwindigkeit der Luftströmung (F) ist.

5. Verfahren nach einem der vorangegangenen Ansprüche, **dadurch gekennzeichnet, daß** die zur Messung des Parameters verwendete Luftdüse ein Ausströmer (16) des Armaturenbrettes ist.

6. Verfahren nach einem der vorangegangenen Ansprüche, **dadurch gekennzeichnet, daß** der zur Messung des Parameters gewählte Funktions- oder Betriebsmodus der Anlage einem Belüftungs- oder Ventilationsmodus entspricht, in welchem die Luftströmung (F) mit einer maximalen Geschwindigkeit beaufschlagt wird.

7. Verfahren nach einem der vorangegangenen Ansprüche, **dadurch gekennzeichnet, daß** man die Messung des Parameters über eine begrenzte Zeitperiode durchführt, typischerweise in der Größenordnung von einigen Sekunden, und zwar nach Stabilisierung der Messung.

8. Verfahren nach einem der vorangegangen Ansprüche, **dadurch gekennzeichnet, daß** der Referenzwert (VR) bestimmten Meßbedingungen entspricht, die abhängig sind insbesondere vom Fahrzeugtyp, dem Luftausströmer oder der Luftdüse, durch welchen oder welche die Luftströme oder der Luftfluß ausgegeben wird, sowie von dem Funktions- oder Betriebsmodus der Anlage während der Messung.

9. Verfahren nach einem der vorangegangen Ansprüche, **dadurch gekennzeichnet, daß** man den gemessenen Wert (VM) und den Referenzwert (VR) vergleicht.

10. Vorrichtung zur Durchführung eines Verfahrens gemäß einem der vorangegangenen Ansprüche, **dadurch gekennzeichnet, daß** sie einen Sensor (22) umfaßt, geeignet zur Anwendung an dem Austritt einer Luftdüse oder eines Luftausströmers (16) der Anlage (14), um die Luftströmung (F) aufzunehmen, sowie eine Meßeinrichtung (24), verbunden mit dem Sensor und geeignet zur Messung eines Parameters, repräsentativ für die Luftströmung.

11. Vorrichtung nach Anspruch 10, **dadurch gekennzeichnet, daß** der Sensor (22) ein Gehäuse (28) umfaßt, aufweisend eine Kontakt- oder Berührungsfläche (30) mit einer Form, die angepaßt ist bezüglich jener des Luftausströmers oder der Luftdüse (16), sowie eine Austrittsöffnung (34), die mit der Meßeinrichtung (24) verbunden ist mittels einer flexiblen Leitung oder einen flexiblen Kanals (26).

12. Vorrichtung nach Anspruch 11, **dadurch gekennzeichnet, daß** das Gehäuse (28) lösbar mit Bezug auf die Leitung oder den Kanal (26) ist.

13. Vorrichtung nach Anspruch 11, **dadurch gekennzeichnet, daß** die Kontaktfläche (30) des Gehäuses (28) an seinem Umriß mit einer verformbaren Beschichtung (32) bereitgestellt ist, undurchlässig für Luft, z. B. aus Kunststoffschaum.

14. Vorrichtung nach Anspruch 11, **dadurch gekennzeichnet, daß** die Kontaktfläche (30) des Gehäuses (28) mit einer verformbaren Beschichtung (32) bedeckt ist, wovon lediglich der Umriß luftundurchlässig ist.

15. Vorrichtung nach einem der Ansprüche 10 bis 14, **dadurch gekennzeichnet, daß** die Meßeinrichtung (24) eine Anzeigeeinrichtung (46) umfaßt, geeignet zur Anzeige des gemessenen Wertes des Parameters.

16. Vorrichtung nach einem der Ansprüche 10 bis 15, **dadurch gekennzeichnet, daß** die Meßeinrichtung (24) eine Luftdruckmeßeinrichtung, wie z. B. ein Manometer, ist.

17. Vorrichtung nach einem der Ansprüche 10 bis 15, **dadurch gekennzeichnet, daß** die Meßeinrichtung (24) eine Luftdurchsatzmeßeinrichtung ist.

18. Vorrichtung nach einem der Ansprüche 10 bis 15, **dadurch gekennzeichnet, daß** die Meßeinrichtung (24) eine Luftgeschwindigkeitsmeßeinrichtung ist.

## Claims

1. Method for detecting the state of an air filter in a heating and/or air conditioning installation for the passenger compartment of a motor vehicle, **characterised in that** the installation (14) is started up in a given mode, a measurement is made of a parameter (P) of an air flow (F) emitted in the passenger compartment (H) by an air nozzle (16) of the installation (14), and the measured value (VM) of this parameter is compared with a reference value (VR), which makes it possible to determine whether or not the filter is to be replaced.

2. Method according to Claim 1, **characterised in that** the parameter is a pressure of the air flow (F).

3. Method according to Claim 1, **characterised in that** the parameter is a flow rate of the air flow (F).

4. Method according to Claim 1, **characterised in that** the parameter is a speed of the air flow (F).

5. Method according to one of the preceding claims, **characterised in that** the air nozzle used for measuring the parameter is a dashboard air vent (16).

6. Method according to one of the preceding claims, **characterised in that** the operating mode of the installation chosen for measuring the parameter corresponds to a ventilation mode in which the air flow (F) is pulsed at a maximum speed.

7. Method according to one of the preceding claims, **characterised in that** the measurement of the parameter is made over a limited period of time, typically around a few seconds, after stabilisation of the measurement.

8. Method according to one of the preceding claims, **characterised in that** the reference value (VR) corresponds to given measurement conditions, which are a function in particular of the type of vehicle, the air nozzle through which the air flow is emitted and the operating mode of the installation during the measurement.

9. Method according to one of the preceding claims, **characterised in that** the measured value (VM) and the reference value (VR) are compared.

10. Device for implementing the method according to one of the preceding claims, **characterised in that** it comprises a sensor (22) able to be applied to the output of an air nozzle (16) of the installation (14) in order to collect the air flow (F), and a measuring apparatus (24) connected to the sensor and able to measure a parameter representing the air flow.

11. Device according to Claim 10, **characterised in that** the sensor (22) comprises a housing (28) with a contact face (30) with a shape adapted to that of the air nozzle (16) and an outlet orifice (34) connected to the measuring apparatus (24) by a flexible conduit (26).

12. Device according to Claim 11, **characterised in that** the casing (28) is removable with respect to the conduit (26).

13. Device according to Claim 11, **characterised in that** the contact face (30) of the housing (28) is provided over its periphery with a deformable covering (32) impermeable to air, for example made from foamed plastic.

14. Device according to Claim 11, **characterised in that** the contact face (30) of the housing (28) is covered with a deformable covering (32), only the periphery of which is impermeable to air.

15. Device according to one of Claims 10 to 14, **characterised in that** the measuring apparatus (24) comprises display means (46) able to display the value of the parameter measured.

16. Device according to one of Claims 10 to 15, **characterised in that** the measuring apparatus (24) is an apparatus for measuring an air pressure, such as a pressure gauge.

17. Device according to one of Claims 10 to 15, **characterised in that** the measuring apparatus (24) is an apparatus for measuring an air flow.

18. Device according to one of Claims 10 to 15, **characterised in that** the measuring apparatus (24) is an apparatus for measuring an air speed.
